# EUROPÄISCHE PATENTSCHRIFT

(11) **EP 2 655 117 B1**
(45) Veröffentlichungstag und Bekanntmachung des Hinweises auf die Patenterteilung: **11.03.2015**
(21) Anmeldenummer: 11801591.6
(22) Anmeldetag: 01.12.2011
(51) Int. Cl.: B60K 35/00

(54) **KRAFTFAHRZEUG-ANZEIGEEINRICHTUNG**
MOTOR VEHICLE DISPLAY DEVICE
DISPOSITIF DE VISUALISATION POUR VÉHICULE AUTOMOBILE

(30) Priorität: 24.12.2010 DE 102010056282
(43) Veröffentlichungstag der Anmeldung: 30.10.2013
(73) Patentinhaber: Volkswagen Aktiengesellschaft, 38436 Wolfsburg (DE)
(72) Erfinder: STURMAT, Sandra, 38102 Braunschweig (DE); GABBERT, Roman, 39104 Magdeburg (DE); KRAWCZYK, Christof, 38440 Wolfsburg (DE); BRETZ, Janine, 38556 Bokensdorf (DE)
(86) Internationale Anmeldenummer: PCT/EP2011/006014
(87) Internationale Veröffentlichungsnummer: WO 2012/084122

(56) Entgegenhaltungen:
- DE-A1-102004 038 916
- US-A1- 2004 085 746
- US-A1- 2007 290 959
- US-B1- 7 494 256

## Beschreibung

Die Erfindung betrifft eine Kraftfahrzeug-Anzeigeeinrichtung mit durch Anzeigeelemente analog und/oder digital anzeigbaren Informationen von Fahrzeug-Betriebszuständen mit den Merkmalen des Oberbegriffs von Patentanspruch 1.

Aus der US 2004/0085746 A1 ist eine derartige Kraftfahrzeug-Anzeigeeinrichtung mit den Merkmalen des Oberbegriffs von Patentanspruch 1 bekannt. Dabei sind Skalierungen und Zahlen von Anzeigeinstrumenten in einer lichtleitenden Platte eingebracht. In der Platte sind auch Ausnehmungen zur Aufnahme von analogen Zeigern der Anzeigeinstrumente vorhanden. Über LEDs ist in die Platte seitlich Licht unterschiedlicher Farbe einkoppelbar, so dass abnorme Betriebszustände des Kraftfahrzeugs leicht signalisiert werden können.

Eine derartige Kraftfahrzeug-Anzeigeeinrichtung ist auch in der gattungsbildenden DE 10 2004 038 916 A1 beschrieben. Konkret ist dort ein Kombiinstrument mit einem Display offenbart, auf dem Anzeigeinstrumente wie Geschwindigkeits- oder Drehzahlmesser mitsamt Zeigern und Skalierungen darstellbar sind. Über dem Display ist eine Dekorschicht angeordnet, die in Abhängigkeit einer Lichtemittierung durch das Display transparent oder nicht-transparent geschaltet ist. Hierdurch sind auf der Ebene der Dekorschicht weitere Anzeigeelemente darstellbar.

In der der US 7 494 256 B1 ist eine Kraftfahrzeug-Anzeigeeinrichtung beschrieben, bei der Anzeigeelemente wie Skalenstriche und Zahlen in einer lichtleitenden Platte eingebracht sind. Über eine ansteuerbare Lichtoptik werden je nach Betriebszustand unterschiedliche Anzeigeelemente erhellt. Hierdurch wird der Eindruck eines sich bewegenden Zeigers geschaffen, ohne dass ein solcher auch tatsächlich physisch eingesetzt wird.

Weitere Kraftfahrzeug-Anzeigeeinrichtungen sind beispielsweise aus der WO 2008/092578 A1, der US 2005/0128733 A1 und der DE 10 2004 049 857 A1 bekannt. Dabei wird durch die Anordnung der Anzeigeelemente in überlagerten Ebenen oder in Ebenenbereichen eine dreidimensionale Anmutung der Anzeige erreicht.

Da Kraftfahrzeug-Anzeigeeinrichtungen zentrale Elemente im Bereich der Instrumententafel eines Kraftfahrzeugs darstellen können, welche zusätzlich zu funktionalen Aspekten auch höchsten Designansprüchen genügen müssen, ist es wünschenswert, bekannte Designeffekte zu verfeinern bzw. alternative Mittel bereitzustellen, mit denen solche Effekte erreicht werden können.

Der Erfindung liegt somit die Aufgabe zu Grunde, eine alternative gattungsgemäße Kraftfahrzeug-Anzeigeeinrichtung bereitzustellen, mit der den Anzeigen einer Kraftfahrzeug-Anzeigeeinrichtung ein dreidimensionales Erscheinungsbild verliehen werden kann.

Diese Aufgabe wird mit den Merkmalen von Anspruch 1 gelöst. Vorteilhafte Weiterbildungen der Erfindung sind den Unteransprüchen entnehmbar.

Die Erfindung geht daher aus von eine Kraftfahrzeug-Anzeigeeinrichtung mit durch Anzeigeelemente analog und/oder digital anzeigbaren Informationen von Fahrzeug-Betriebszuständen (bspw. Fahrgeschwindigkeit oder Motordrehzahl), bei der in Blickrichtung auf die Kraftfahrzeug-Anzeigeeinrichtung gesehen die Anzeigeelemente zumindest in zwei überlagerten Ebenen oder Ebenenbereichen angeordnet sind.

Es ist wenigstens eine erste Ebene oder ein erster Ebenenbereich vorgesehen ist, in der/dem wenigstens ein aktives Anzeigeelement angeordnet ist und wenigstens eine weitere Ebene oder ein weiterer Ebenenbereich, welche/welcher der ersten Ebene oder dem ersten Ebenebereich in Blickrichtung gesehen vorgelagert ist, wobei darin lediglich passive Anzeigeelemente angeordnet sind, zumindest jedoch wenigstens ein passives Anzeigeelement angeordnet ist.

Durch diese Maßnahme kann ein besonderer 3D-Effekt erzielt werden. Die passiven Anzeigeelemente scheinen förmlich innerhalb der Kraftfahrzeug-Anzeigeeinrichtung zu schweben.

Die Kraftfahrzeug-Anzeigeeinrichtung kann dabei insbesondere ein so genanntes Kombi-Instrument sein, aber auch andere Kraftfahrzeug-Anzeigeeinrichtungen, insbesondere im Bereich der Instrumententafel, sind denkbar.

Unter einem aktiven Anzeigeelement soll dabei ein solches Element verstanden werden, welches innerhalb der Kraftfahrzeug-Anzeigeeinrichtung veränderlich ist und sich in seiner Position, Größe und/oder Form ändert und sich so einem jeweils anzuzeigenden Fahrzeug-Betriebszustand anpasst. Dies kann beispielsweise ein analoger Instrumentenzeiger eines Tachometers oder eines Drehzahlmessers sein. Gleichermaßen kann dies natürlich ein über ein entsprechendes (frei programmierbares) Display digital angezeigter Instrumentenzeiger sein.

Unter einem passiven Anzeigeelement soll hingegen ein solches Element verstanden werden, dessen Position, Größe und Form sich innerhalb der Kraftfahrzeug-Anzeigeeinrichtung nicht ändert. Dies kann beispielsweise ein Skalenstrich einer Skalierung, eine die Höhe der Geschwindigkeit oder der Drehzahl bestimmende Ziffer oder auch nur ein Symbol sein.

Gemäß einer Weiterbildung der Erfindung wird vorgeschlagen, dass die in der ersten Ebene bzw. im ersten Ebenenbereich vorgesehenen Anzeigeelemente wenigstens ein analoges Anzeigeelement und wenigstens ein über ein Display digital anzeigbares Anzeigelement umfassen. Die Verbindung von analogen Anzeigeelementen mit digital anzeigbaren Anzeigeelementen (vorzugsweise über ein freiprogrammierbaren Display) erhöht die Flexibilität in der Anzeige ungemein.

Dabei kann zweckmäßigerweise vorgesehen sein, dass die in der ersten Ebene bzw. im ersten Ebenenbereich und in der zweiten Ebene bzw. im zweiten Ebenenbereich vorgesehenen Anzeigeelemente in der Art eines 2-Augen-Kombiinstrument angeordnet sind, wobei dem wenigstens einen analogen Anzeigeelement und dem wenigstens einen digital anzeigbaren Anzeigeelement jeweils ein Teil von mehreren in der zweiten Ebene bzw. im zweiten Ebenenbereich vorgesehenen passiven Anzeigeelementen zugeordnet ist bzw. von diesen überlagert.

Auf diese Weise kann eine sehr elegant anmutende Anzeige für ein Kombi-Instrument in "Zwei-Augen-Optik" realisiert werden, beispielsweise mit einer als Rundinstrument ausgebildeten Geschwindigkeitsanzeige (Tachometer, linkes "Auge") und einem ebenfalls als Rundinstrument ausgebildeten Drehzahlmesser (rechtes "Auge"). Auch der durch die Kombination von analoger und digitaler Anzeigetechnik bestehende (u.U. unerwünschte) "Designsprung" kann durch diese Maßnahme abgemildert werden.

Es ist erfindungsgemäß in der zweiten Ebene bzw. im zweiten Ebenenbereich wenigstens ein Bauteil mit wenigstens zwei Licht leitenden Körpern vorgesehen ist, wobei zwischen den Körpern wenigstens ein passives Anzeigelement angeordnet ist und zwischen den Körpern wenigstens abschnittsweise ein Trennbereich ausgebildet ist, welcher schräg zur Flächenerstreckung wenigstens eines der Körper verläuft und das wenigstens eine passive Anzeigeelement in der Ebene des Trennbereichs angeordnet ist. Hierdurch lässt sich ein sehr spezieller dreidimensionaler Effekt erzielen, da es so möglich ist, die passiven Anzeigeelemente schräg im Raum schwebend erscheinen zu lassen. Beispielsweise kann dies dazu benutzt werden, um die Teilstriche einer Skalierung entsprechend im Raum zu positionieren.

Sehr zweckmäßig und für die Herstellung Vorteile bringend ist es, wenn wenigstens einer der Körper plattenförmig ausgebildet ist und wenigstens eine Vertiefung oder eine Öffnung aufweist, in die der andere Körper zumindest teilweise eingelassen ist.

Insbesondere kann dabei das Bauteil zweckmäßigerweise wenigstens zwei Vertiefungen oder Öffnungen aufweisen, in die jeweils ein anderer Körper zumindest teilweise eingelassen ist. Zusätzlich können jeweils zwischen den Körpern passive Anzeigeelemente angeordnet und Bestandteil einer Instrumentenskalierung sein. So kann bspw. eine sehr hochwertig anmutende Skalierung für ein Kombi-Instrument mit einer bewährten "Zweiaugenoptik" realisiert werden.

Wenn das Bauteil von einem ringförmigen Lichtleiter umgeben ist, in den Licht mittels wenigstens eines Leuchtmittels einkoppelbar ist, wobei das wenigstens eine passive Anzeigeelement zur Lichtauskopplung dient, ist hierdurch eine sehr gleichmäßige Lichteinkopplung in das Bauteil bzw. eine sehr gute Beleuchtung der in das Bauteil eingebrachten passiven Anzeigeelemente (wie z.B. der Skalenstriche einer Skalierung) möglich.

Ferner ist es zweckmäßig, wenn der Lichtleiter mit vier Licht-Einkopplungsstellen versehen ist, wobei jede Lichteinkopplungsstelle am Ende einer rampenartigen Verdickung des Lichtleiters angeordnet ist. Dies trägt zu einer sehr effizienten Lichteinkopplung in den Lichtleiter, welche mit vergleichsweise wenig Leuchtmitteln auskommt, bei. Als geeignete Leuchtmittel kommen beispielsweise LEDs in Betracht.

Die Licht-Einkopplungsstellen könnten sehr vorteilhaft in einer Draufsicht auf das Bauteil in einem Bereich zwischen der Instrumentenskalierung angeordnet sein. Dies trägt zu einer gleichmäßigen Ausleuchtung der beiden Instrumentenskalierungen eines Kombi-Instrumentes in "Zwei-Augen-Optik" bei.

Weitere Vorteile und Ausgestaltungen der Erfindung werden anhand von bevorzugten Ausführungsbeispielen deutlich, was mit Hilfe der beiliegenden Figuren näher erläutert werden soll. Dabei bedeuten
- Fig. 1: eine äußerst prinziphafte Darstellung einer erfindungsgemäßen Anzeigeeinrichtung (bevorzugtes Ausführungsbeispiel), wobei ein plattenförmiges Bauteil mit passiven Anzeigeelementen verwendet wird,
- Fig. 2: eine äußerst prinziphafte Darstellung einer weiteren Anzeigeeinrichtung, wobei ebenfalls ein plattenförmiges Bauteil mit passiven Anzeigeelementen verwendet wird,
- Fig. 3: eine perspektivische Darstellung des aus mehreren lichtleitenden Körpern bestehenden, in Fig.1 ersichtlichen plattenförmigen Bauteils vor einer Montage und
- Fig. 4: eine Darstellung des weiterbearbeiteten Bauteils gem. Fig. 3 von oben, wobei zusätzlich ein zur Beleuchtung verwendeter, ringförmiger Lichtleiter dargestellt ist.

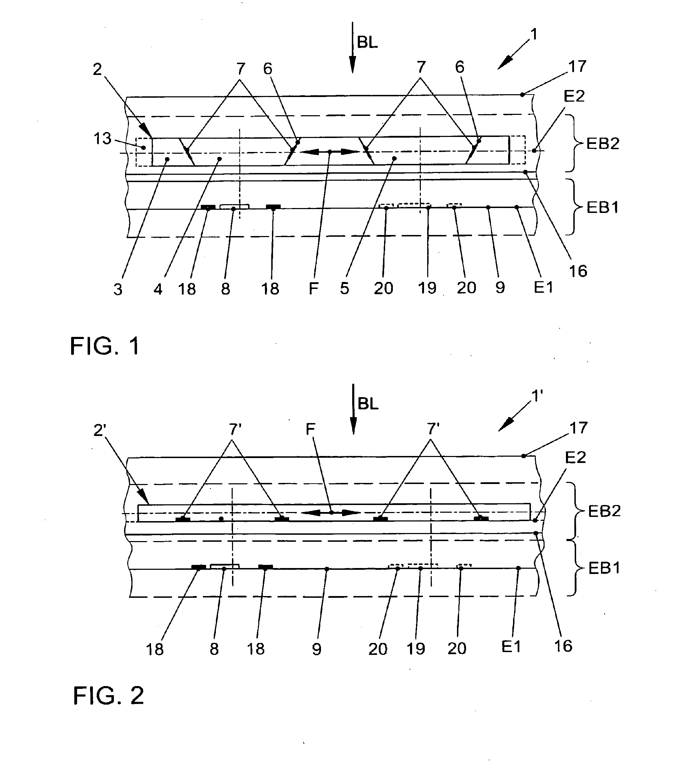

Zunächst wird auf Fig. 1 Bezug genommen. Darin ist prinziphaft ein erfindungsgemäßes Kombi-Instrument 1 ersichtlich, in welches ein plattenförmiges Bauteil 2 verbaut ist. Das Bauteil 2 besteht aus einem plattenförmigen, lichtleitenden Körper 3, in den zwei ebenso lichtleitende, konusartige Körper 4 und 5 eingelassen sind. Die Körper 3,4 und 5 sind vorzugsweise aus Polymethylmethacrylat (PMMA).

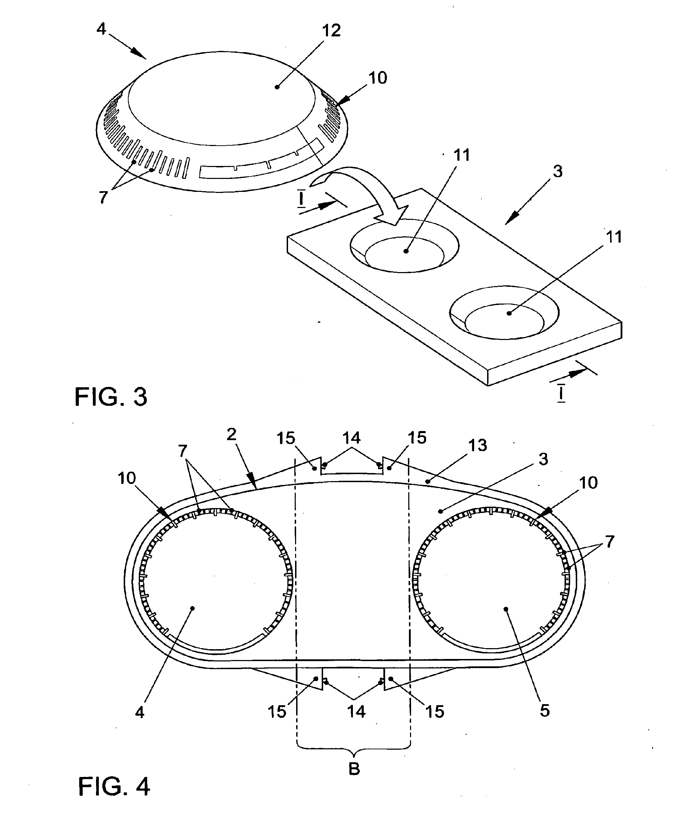

Zwischen den lichtleitenden Körpern 3 und 4 bzw. 3 und 5 ist jeweils ein umlaufender, konusartiger Trennbereich 6 ausgebildet (vgl. zu den vorstehenden Erläuterungen auch Fig. 3).

In der Fig. 1, welche das Bauteil 2 bzw. 3 gemäß Schnittansicht in Fig. 3 darstellt, sind die Trennbereiche 6 als zu einer Flächenerstreckung F des Bauteils 3 schräg verlaufende Punktlinien ersichtlich. Dabei sind innerhalb der Trennbereiche 6 passive Anzeigeelemente 7 durch etwas dickere Striche angedeutet. Die Anzeigelemente 7 sind dabei auf einer Ebene E2 bzw. innerhalb eines Ebenenbereiches EB2 angeordnet.

Wie in Fig. 3 ersichtlich können die passiven Anzeigeelemente in Form von Teilstrichen einer Skalierung 10 ausgebildet sein.

Aus der Fig. 1 ist auch ersichtlich, dass sich das Bauteil 2 in einer Blickrichtung BL auf das Kombi-Instrument 1 in der Ebene E2 bzw. innerhalb des Ebenenbereichs EB2 des Kombi-Instrumentes befindet, welche vor einer ersten Ebene E1 bzw. vor einem ersten Ebenebereich EB 1 liegt, in der/dem aktive Anzeigeelemente angeordnet sind.

Als aktive Anzeigeelemente in der erste Ebene E1 sind auf der linken Seite des Kombi-Instrumentes 1 ein analoger Instrumentenzeiger 8 (Tachonadel) mit analog angezeigten Ziffern 18 und auf der rechten Seite ein über ein frei programmierbares Display 9 digital anzeigbarer Instrumentenzeiger 19 ersichtlich. Das Display 9 dient zur digitalen Anzeige des Instrumentenzeigers 19 und Ziffern 20 eines Drehzahlmessers. Zusätzlich zu den Anzeigen sind noch weitere Anzeigen situationsabhängig einblendbar bzw. die dargestellten Informationen können situationsabhängig verändert werden. Beispielsweise kann die Dicke und die Farbe des Zeigers mit sich verändernder Drehzahl auch verändert werden.

Auch ist denkbar, den über dem freiprogrammierbaren Display 9 befindlichen (unveränderbaren) Skalenstrichen 7,7' bzw. der über diesem (9) befindlichen Skalierung 10 in Abhängigkeit von einem auswählbaren Fahrmodus darstellbare Ziffern 20 zuzuordnen. So könnte z.B. in einem "Sparmodus" die gesamte Skalierung 10 einen anderen (kleineren) Drehzahlbereich umfassen als für einen "Sportmodus". Entsprechend wäre dies für eine Geschwindigkeitsanzeige denkbar, bei der im "Sparmodus" die Skalierung 10 bspw. nur einen Bereich von 0-160 km/h umfassen würde, während der Skalierung 10 in einem "Sportmodus" durch die (veränderbaren) Ziffern 20 ein Bereich von 0-240 km/h zugeordnet sein könnte.

Ferner ist oberhalb der ersten Ebene E1 bzw. des Ebenenbereiches EB1, welches also die "aktive" Anzeigeebene darstellt, eine schwarze Durchleuchtfolie 16 eingebracht. Diese Durchleuchtfolie 16 führt dazu, dass im ausgeschalteten Zustand des Fahrzeugs für einen Betrachter die aktive Anzeigeebene E1 unsichtbar bleibt und nur bei einer Beleuchtung bspw. des Instrumentenzeigers 8 sowie bei einer aktivierten Darstellung des Instrumentenzeigers 19 diese Elemente sichtbar werden.

Ferner ist oberhalb der zweiten Ebene E2, welche eine passive Anzeigeebene darstellt, noch eine transparente Abdeckung 17 vorgesehen. Allerdings ist eine solche Abdeckung 17 nicht unbedingt notwendig und ist z.B. dann entbehrlich, wenn das aus den Licht leitenden Körpern 3, 4 und 5 bestehende Bauteil 2 selbst bereits entspiegelt wäre.
Aufgrund der nur prinziphaften Darstellung sind bspw. notwendige Befestigungselemente für die Befestigung des Bauteils 2 innerhalb des Kombi-Instrumentes 1 nicht dargestellt.

Nunmehr zurückkommend auf Fig. 3 soll eine mögliche Form der Herstellung des Bauteils 2 beschrieben werden.

So wird zunächst der lichtleitende Körper 3 aus dem Werkstoff PMMA gefräst, wobei der plattenförmige Körper 3 zwei kreisförmige, konusartige Vertiefungen 11 aufweist. Die Vertiefungen haben somit ein tellerförmiges Aussehen, wobei die Tellerränder Bestandteil der sich bildenden Trennbereiche 6 (vgl. Fig.1) sind.

Statt der tellerförmigen Vertiefungen 11 könnten unter Umständen auch Durchgangsöffnungen erzeugt werden.

Als nächster Schritt wird für die Ausnehmungen 11 jeweils ein lichtleitender, konusartiger Körper 4 bzw. 5 (nicht dargestellt), ebenfalls aus PMMA gedreht.

Im Anschluss daran erfolgt die Herstellung eines Ringes aus weißem PMMA (ebenfalls nicht dargestellt). Jeder dieser Ringe wird mit einem geeigneten Kleber jeweils auf der schrägen Fläche des konusartigen Körpers 4 bzw. 5 luftblasenfrei aufgeklebt.

In einem weiteren Schritt wird der weiße Ring soweit abgefräst, dass erhabene, passive Anzeigeelemente in Form von Skalierungsstrichen 7 stehen bleiben und sich eine umlaufende Skalierung 10 ergibt.

Nun werden die beiden Körper 4 und 5 mit dem Körper 3 ebenfalls im Wesentlichen luftblasenfrei verklebt (vgl. Pfeil in Fig. 3 für Körper 4).

In einem weiteren Schritt wird dann das erzeugte (Roh)Bauteil 2 von beiden Seiten (also Sichtseite und gegenüberliegende Seite) abgefräst, bis zwei im Wesentlichen plane Oberflächen entstehen. Zuletzt erfolgt eine Abfräsung der Kantenseiten, bis eine gewünschte ovale Grundrissform des Bauteils 2 (vgl. auch Fig. 4) entsteht.

Angemerkt sei, dass das Bauteil 2 natürlich auch mit anderen geeigneten Herstellungsverfahren bzw. aus anderen geeigneten Werkstoffen hergestellt werden kann. Beispielsweise ist auch ein Gießen aus Polyurethan-Harzen (PU-Harzen) in mehreren Schritten möglich, z.B. in einem ersten Schritt vergießen von klarem PU und in einem zweiten Schritt vergießen von weiß eingefärbtem, transluzentem PU.

Für eine Serienfertigung wäre eine Herstellung im Spritzgießverfahren besonders geeignet.

In Fig. 4 ist nun ersichtlich, dass zur Ausleuchtung bzw. zur Einkopplung von Licht in das aus den Körpern 3, 4 und 5 bestehende Bauteil 2 ein um den Körper 3 angeordneter, ringförmiger Lichtleiter 13 vorgesehen ist. Zur Lichteinkopplung in den Lichtleiter 13 sind vier LEDs 14 vorgesehen. Es ist ersichtlich, dass sich die Einkopplungsstellen jeweils am Ende von rampenartigen Verdickungen 15 des Lichtleiters 13 befinden. Ferner ist erkennbar, dass die Licht-Einkopplungsstellen bzw. die LEDs 14 in der Draufsicht auf das Bauteil 2 bzw. 3 in einem Bereich B zwischen den Instrumentenskalierungen 10 angeordnet sind.

Wird nun mittels der LEDs 14 Licht in den Lichtleiter 13 eingekoppelt, so gelangt dieses Licht auch in die Licht leitenden Körper 3, 4 und 5, wodurch die Skalenstriche 7, 7' bzw. die Skalierungen 10 zum Leuchten gebracht werden. Auf diese Weise entsteht ein ganz spezieller 3D-Effekt, wobei die Skalierungen 10 förmlich über den Instrumentenzeigern 8 bzw. 19 zu schweben scheinen.

Der um das Bauteil 2 angeordnete, ringförmige Lichtleiter 13 ist in Fig. 1 gestrichelt angedeutet. Schließlich sei die Fig. 2 erläutert, welche eine Abwandlung des erfindungsgemäßen Kombi-Instrumentes 1 gem. Fig.1 zeigt.

In Fig. 2 ist ein Kombi-Instrument 1' in vergleichbarer "Ebenentechnik" aufgebaut. Im Unterschied zu Fig.1 ist jedoch ein plattenförmiges Bauteil 2' (ebenfalls aus PMMA) eingesetzt, welches passive Anzeigeelemente 7' in Form von Skalenstrichen aufweist, die in etwa parallel zur Flächenerstreckung F des Bauteils 2' ausgerichtet sind.

Die Anzeigeelemente 7' sind vorzugsweise auf das Bauteil 2' aufgedruckt, eingefräst oder eingegossen. Sie können aber auch in sonstiger Weise auf- oder eingebracht sein.

### Bezugszeichenliste

- 1, 1': Kombi-Instrument
- 2, 2': Bauteil des Kombi-Instrumentes
- 3: Licht leitender Körper
- 4: Licht leitender Körper
- 5: Licht leitender Körper
- 6: Trennbereich
- 7, 7': Skalenstrich als passives Anzeigeelement
- 8: Instrumentenzeiger analog (Tachonadel)
- 9: digitales, freiprogrammierbares Display
- 10: Skalierung
- 11: Ausnehmungen oder Durchgangsöffnungen
- 12: Planseite des Körpers
- 13: ringförmiger Lichtleiter
- 14: Leuchtmittel
- 15: rampenartige Verdickung
- 16: schwarze Durchleuchtfolie
- 17: transparente Abdeckung
- 18: Ziffern für Anzeigewerte (analog)
- 19: Instrumentenzeiger (digital)
- 20: Ziffern für Anzeigewerte (digital)
- B: zwischen den Skalierungen liegender Bereich
- BL: Blickrichtung auf das Kombi-Instrument
- E1: erste Ebene des Kombi-Instrumentes (aktive Anzeige)
- EB1: die erste Ebene einschließender Ebenenbereich des Kombi-Instrumentes
- E2: zweite Ebene des Kombi-Instrumentes (passive Anzeige)
- EB2: die zweite Ebene einschließender Ebenenbereich des Kombi-Instrumentes
- F: Flächenerstreckung

## Patentansprüche

1. Kraftfahrzeug-Anzeigeeinrichtung (1,1') mit durch Anzeigeelemente (7,8,9,19,20) analog und/oder digital anzeigbaren Informationen von Fahrzeug-Betriebszuständen, bei der in Blickrichtung (BL) auf die Kraftfahrzeug-Anzeigeeinrichtung (1,1') gesehen die Anzeigeelemente (7,8,9,19,20) zumindest in zwei überlagerten Ebenen (E1, E2) oder Ebenenbereichen (EB1, EB2) angeordnet sind, wobei wenigstens eine erste Ebene (E1) oder ein erster Ebenenbereich (EB1) vorgesehen ist, in der/dem wenigstens ein aktives Anzeigeelement (8,19) angeordnet ist, welches innerhalb der Kraftfahrzeug-Anzeigeeinrichtung veränderlich ist und sich in seiner Position, Größe und/oder Form ändert und sich so einem jeweils anzuzeigenden Fahrzeug-Betriebszustand anpasst und wenigstens eine weitere Ebene (E2) oder ein weiterer Ebenenbereich (EB2) vorgesehen ist, welche/welcher der ersten Ebene (E1) oder dem ersten Ebenenbereich (EB1) in Blickrichtung (BL) gesehen vorgelagert ist, wobei darin (E2 bzw. EB2) lediglich passive Anzeigeelemente (7, 7') angeordnet sind, zumindest jedoch wenigstens ein passives Anzeigeelement (7,7') angeordnet ist, dessen Position, Größe und Form sich innerhalb der Kraftfahrzeug-Anzeigeeinrichtung nicht ändert, **dadurch gekennzeichnet, dass** in der zweiten Ebene (E2) bzw. im zweiten Ebenenbereich (EB2) wenigstens ein Bauteil (2) mit wenigstens zwei Licht leitenden Körpern (3,4,5) vorgesehen ist, wobei zwischen den Körpern (3,4 bzw. 3,5) wenigstens ein passives Anzeigelement (7) angeordnet ist und zwischen den Körpern (3,4 bzw. 3,5) wenigstens abschnittsweise ein Trennbereich (6) ausgebildet ist, welcher schräg zur Flächenerstreckung (F) wenigstens eines der Körper (3,4,5) verläuft und das wenigstens eine passive Anzeigeelement (7) in der Ebene des Trennbereichs (6) angeordnet ist.

2. Kraftfahrzeug-Anzeigeeinrichtung (1,1') nach Anspruch 1, **dadurch gekennzeichnet, dass** die in der ersten Ebene (E1) bzw. im ersten Ebenenbereich (EB1) vorgesehenen Anzeigeelemente (8,18,19,20) wenigstens ein analoges Anzeigeelement (8) und wenigstens ein über ein Display (9) digital anzeigbares Anzeigelement (19) umfassen.

3. Kraftfahrzeug-Anzeigeeinrichtung (1,1') nach Anspruch 1 oder 2, **dadurch gekennzeichnet, dass** die in der ersten Ebene (E1) bzw. im ersten Ebenenbereich (EB1) und in der zweiten Ebene (E2) bzw. im zweiten Ebenenbereich (EB2) vorgesehenen Anzeigeelemente (8,18,19,20; 7,7') in der Art eines Zwei-Augen-Kombiinstrumentes angeordnet sind, wobei dem wenigstens einen analogen Anzeigeelement (8) und dem wenigstens einen digital anzeigbaren Anzeigeeelement (19) jeweils ein Teil von mehreren in der zweiten Ebene (E2) bzw. im zweiten Ebenenbereich (EB2) vorgesehenen passiven Anzeigeelementen (7,7') zugeordnet ist.

4. Kraftfahrzeug-Anzeigeeinrichtung (1) nach einem der Ansprüche 1 bis 3, **dadurch gekennzeichnet, dass** wenigstens einer (3) der Körper (3,4,5) plattenförmig ausgebildet ist und wenigstens eine Vertiefung (11) oder eine Öffnung aufweist, in die der andere Körper (4,5) zumindest teilweise eingelassen ist.

5. Kraftfahrzeug-Anzeigeeinrichtung (1) nach einem der Ansprüche 1 bis 4, **dadurch gekennzeichnet, dass** das Bauteil (2) von einem ringförmigen Lichtleiter (13) umgeben ist, in den Licht mittels wenigstens eines Leuchtmittels (14) einkoppelbar ist, wobei das wenigstens eine passive Anzeigeelement (7) zur Lichtauskopplung dient.

6. Kraftfahrzeug-Anzeigeeinrichtung (1) nach einem der Ansprüche 1 bis 5, **dadurch gekennzeichnet, dass** das Bauteil (2) wenigstens zwei Vertiefungen (11) oder Öffnungen aufweist, in die jeweils ein anderer Körper (4,5) zumindest teilweise eingelassen ist und jeweils zwischen den Körpern (3,4; 3,5) passive Anzeigeelemente (7) angeordnet und Bestandteil einer Instrumentenskalierung (10) sind.

7. Kraftfahrzeug-Anzeigeeinrichtung (1) nach wenigstens einem der Ansprüche 5 und 6, **dadurch gekennzeichnet, dass** der Lichtleiter (13) mit vier Licht-Einkopplungsstellen versehen ist, wobei jede Lichteinkopplungsstelle am Ende einer rampenartigen Verdickung (15) des Lichtleiters (13) angeordnet ist.

8. Kraftfahrzeug-Anzeigeeinrichtung (1) nach Anspruch 7, **dadurch gekennzeichnet, dass** die Licht-Einkopplungsstellen in einer Draufsicht auf das Bauteil (2) in einem Bereich (B) zwischen den Instrumentenskalierungen (10) angeordnet sind.

## Claims

1. Motor vehicle display device (1, 1') with information concerning vehicle operating states that can be displayed in an analogue and/or digital manner by display elements (7, 8, 9, 19, 20), in which device, in the direction of viewing (BL) the motor vehicle display device (1, 1'), the display elements (7, 8, 9, 19, 20) are arranged at least in two superimposed planes (E1, E2) or plane regions (EB1, EB2), there being provided at least one first plane (E1) or one first plane region (EB1), in which at least one active display element (8, 19) is arranged, an element which is variable within the motor vehicle display device and changes in its position, size and/or form and thus adapts itself to a vehicle operating state that is respectively to be displayed, and at least one further plane (E2) or one further plane region (EB2), which is positioned ahead of the first plane (E1) or the first plane region (EB1) in the viewing direction (BL), only passive display elements (7, 7') being arranged therein (E2 or EB2), or at least there being arranged at least one passive display element (7, 7') of which the position, size and form do not change within the motor vehicle display device, **characterized in that** at least one component (2) with at least two light-conducting bodies (3, 4, 5) is provided in the second plane (E2) or in the second plane region (EB2), at least one passive display element (7) being arranged between the bodies (3, 4 or 3, 5) and there being formed at least in certain regions between the bodies (3, 4 or 3, 5) a separating region (6), which runs at an angle in relation to the area extent (F) of at least one of the bodies (3, 4, 5), and the at least one passive display element (7) being arranged in the plane of the separating region (6).

2. Motor vehicle display device (1, 1') according to Claim 1, **characterized in that** the display elements (8, 18, 19, 20) provided in the first plane (E1) or in the first plane region (EB1) comprise at least one analogue display element (8) and at least one display element (19) that can be displayed digitally by means of a display (9).

3. Motor vehicle display device (1, 1') according to Claim 1 or 2, **characterized in that** the display elements (8, 18, 19, 20; 7, 7') that are provided in the first plane (E1) or in the first plane region (EB1) and in the second plane (E2) or in the second plane region (EB2) are arranged in the manner of a two-eye instrument cluster, the at least one analogue display element (8) and the at least one digitally displayable display element (19) respectively being assigned some of a number of passive display elements (7, 7') that are provided in the second plane (E2) or in the second plane region (EB2).

4. Motor vehicle display device (1) according to one of Claims 1 to 3, **characterized in that** at least one (3) of the bodies (3, 4, 5) is of a plate-shaped form and has at least one depression (11) or one opening, in which the other body (4, 5) is at least partially inserted.

5. Motor vehicle display device (1) according to one of Claims 1 to 4, **characterized in that** the component (2) is surrounded by an annular light conductor (13) into which light can be coupled by means of at least one illuminant (14), the at least one passive display element (7) serving for coupling out the light.

6. Motor vehicle display device (1) according to one of Claims 1 to 5, **characterized in that** the component (2) has at least two depressions (11) or openings, in each of which another body (4, 5) is at least partially inserted, and passive display elements (7) being respectively arranged between the bodies (3, 4; 3, 5) and forming part of an instrument gauge (10).

7. Motor vehicle display device (1) according to at least one of Claims 5 and 6, **characterized in that** the light conductor (13) is provided with four light coupling-in points, each light coupling-in point being arranged at the end of a ramp-like thickening (15) of the light conductor (13).

8. Motor vehicle display device (1) according to Claim 7, **characterized in that**, in a plan view of the component (2), the light coupling-in points are arranged in a region (B) between the instrument gauges (10).

## Revendications

1. Dispositif de visualisation de véhicule automobile (1, 1') avec des informations relatives à des états de fonctionnement du véhicule pouvant être affichées de façon analogique et/ou numérique par le biais d'éléments de visualisation (7, 8, 9, 19, 20), dans lequel, vus dans la direction du regard (BL) sur le dispositif de visualisation de véhicule automobile (1, 1'), les éléments de visualisation (7, 8, 9, 19, 20) sont disposés au moins dans deux plans (E1, E2) superposés ou deux zones de plan (EB1, EB2) superposées, au moins un premier plan (E1) ou une première zone de plan (EB1) étant prévu/prévue, dans lequel/laquelle un élément de visualisation (8, 19) actif est disposé, celui-ci pouvant varier à l'intérieur du dispositif de visualisation de véhicule automobile et variant dans sa position, taille et/ou forme de façon à s'adapter à un état de fonctionnement du véhicule devant respectivement être indiqué et au moins un plan (E2) supplémentaire ou une zone de plan (EB2) supplémentaire étant prévu/prévue, lequel/laquelle est placé/placée au moins par rapport au premier plan (E1) ou à la première zone de plan (EB1) dans la direction du regard (BL), seuls des éléments de visualisation (7, 7') passifs étant disposés dans celui-ci ou celle-ci (E2 et/ou EB2), au moins toutefois au moins un élément de visualisation (7, 7') passif étant disposé dont la position, la taille et la forme ne varient pas à l'intérieur du dispositif de visualisation de véhicule automobile, **caractérisé en ce qu'**au moins un composant (2) doté d'au moins deux corps (3, 4, 5) luminoconducteurs est prévu dans le deuxième plan (E2) et/ou dans la deuxième zone de plan (EB2), au moins un élément de visualisation passif (7) étant disposé entre les corps (3, 4 et/ou 3, 5) et au moins une zone de séparation (6) étant formée en partie entre les corps (3, 4 et/ou 3, 5), ladite zone de séparation s'étendant à l'oblique par rapport à l'extension de surface (F) d'au moins un des corps (3, 4, 5) et l'au moins un élément de visualisation (7) passif étant disposé dans un plan de la zone de séparation (6).

2. Dispositif de visualisation de véhicule automobile (1, 1') selon la revendication 1, **caractérisé en ce que** les éléments de visualisation (8, 18, 19, 20) prévus dans le premier plan (E1) et/ou dans la première zone de plan (EB1) comprennent au moins un élément de visualisation (8) analogique et au moins un élément de visualisation (19) pouvant être affiché de façon numérique via un écran (9).

3. Dispositif de visualisation de véhicule automobile (1, 1') selon la revendication 1 ou 2, **caractérisé en ce que** les éléments de visualisation (8, 18, 19, 20 ; 7, 7') prévus dans le premier plan (E1) et/ou dans la première zone de plan (EB1) et dans le deuxième plan (E2) et/ou dans la deuxième zone de plan (EB2) sont disposés à la façon d'un instrument de tableau de bord à deux yeux, respectivement une partie parmi plusieurs éléments de visualisation (7, 7') passifs prévus dans le deuxième plan (E2) et/ou dans la deuxième zone de plan (EB2) étant associée à l'au moins un élément de visualisation (8) analogique et à l'au moins élément de visualisation (19) pouvant être affiché de façon numérique.

4. Dispositif de visualisation de véhicule automobile (1) selon l'une des revendications 1 à 3, **caractérisé en ce qu'**au moins un (3) de ces corps (3, 4, 5) prend une forme de plaque et qu'il comprend au moins un renfoncement (11) ou une ouverture dans lequel ou laquelle l'autre corps (4, 5) est encastré au moins en partie.

5. Dispositif de visualisation de véhicule automobile (1) selon l'une des revendications 1 à 4, **caractérisé en ce que** le composant (2) est entouré par un conducteur de lumière (13) de forme annulaire dans lequel la lumière peut être couplée à l'aide d'au moins un moyen d'éclairage (14), l'au moins un élément de visualisation (7) passif servant au découplage de la lumière.

6. Dispositif de visualisation de véhicule automobile (1) selon l'une des revendications 1 à 5, **caractérisé en ce que** le composant (2) comporte au moins deux renfoncements (11) ou ouvertures dans lesquels ou lesquelles respectivement un autre corps (4, 5) est au moins en partie encastré et dans lesquels ou lesquelles des éléments de visualisation (7) passifs sont disposés entre les corps (3, 4 ; 3, 5) et font partie d'une échelle de gradation d'instrument de bord (10).

7. Dispositif de visualisation de véhicule automobile (1) selon au moins l'une des revendications 5 et 6, **caractérisé en ce que** le conducteur de lumière (13) est pourvu de quatre points de couplage de lumière, chaque point de couplage de lumière étant disposé à une extrémité d'un épaississement (15) en forme de rampe du conducteur de lumière (13).

8. Dispositif de visualisation de véhicule automobile (1) selon la revendication 7, **caractérisé en ce que** les points de couplage de lumière sont disposés dans une zone (B) située entre les échelles de gradation d'instrument de bord (10), en vue de dessus sur le composant (2).
